# EUROPÄISCHE PATENTANMELDUNG

(11) **EP 1 168 782 A2**
(43) Veröffentlichungstag der Anmeldung: **02.01.2002**
(21) Anmeldenummer: 01104392.4
(22) Anmeldetag: 23.02.2001
(51) Int. Cl.: H04M 1/57

(54) **Verfahren zur Anruferidentifikation**

(30) Priorität: 21.06.2000 DE 10030406
(71) Anmelder: Tenovis GmbH & Co. KG, 60362 Frankfurt am Main (DE)
(72) Erfinder: Rodewald, Frank, 50181 Bedburg (DE)
(74) Vertreter: Bohnenberger, Johannes, Dr.

(57) **Zusammenfassung**

Es wird ein Verfahren zur Anruferidentifikation vorgeschlagen, das dazu dient, dass mittels verschiedener Durchwahlnummern, die einem Zielgerät zugeordnet werden, ein Anrufer eine bestimmte Anzeigeninformation als Anruferidentifikation dem Zielgerät überträgt. Dabei wertet eine Telekommunikationsanlage, die mit dem Zielgerät verbunden ist, die Durchwahlnummer aus und setzt sie in eine Endgerätenummer um, wobei in Abhängigkeit von der Durchwahlnummer dem Zielgerät eine Anzeigeinformation übertragen wird. Das Zielgerät stellt diese Anzeigeinformation dar. Anhand der Anzeigeinformationen ist vorteilhafterweise eine Einschätzung der Bedeutung des Anrufs möglich.

## Beschreibung

### Stand der Technik

Die Erfindung geht aus von einem Verfahren zur Anruferidentifikation nach der Gattung des unabhängigen Patentanspruchs.

Bei rein digitalen Verbindungen im Telefonverkehr ist es möglich, dass die Rufnummer des Rufenden auf einer Anzeige des Telekommunikationsendgeräts des Gerufenen angezeigt wird. Durch Voreinstellungen, die am gerufenen Telekommunikationsendgerät durchgeführt werden können, ist es möglich, dass solche Rufnummern mit Namen oder anderen Textinformationen verknüpft werden, die dann bei einem solchen Anruf beim Angerufenen auf einer Anzeige des Telekommunikationsendgeräts angezeigt werden.

### Vorteile der Erfindung

Das erfindungsgemäße Verfahren zur Anruferidentifikation mit den Merkmalen des unabhängigen Patentanspruchs hat demgegenüber den Vorteil, dass eine Anruferidentifikation auch funktioniert, wenn zumindest Teile des Übertragungswegs zwischen dem Telekommunikationsendgerät des Rufenden und des Gerufenen über analoge Leitungen führen oder die herkömmliche Rufnummerübertragung gezielt gesperrt wird (Calling Line Identification Restriction = CLIR). Weiterhin liegt nun die Wahlmöglichkeit, welche Anzeige als Anruferidentifikation verwendet wird, bei dem Rufenden. Dies ist von Vorteil, da ein Rufender weiß, welche Dringlichkeit sein Anruf hat und damit macht er seinen Anruf entsprechend kenntlich. Darüber hinaus ist von Vorteil, dass der Gerufene keine Angaben an seinem Telekommunikationsendgerät zu machen braucht, d.h. der Aufwand wird reduziert. Weiterhin ist es von Vorteil, dass durch die Durchwahlnummern eine große Anzahl von verschiedenen Informationen durch diese Durchwahlnummern codierbar ist. Der Anrufer wählt beispielsweise die entsprechende Durchwahlnummer, um die jeweilige Anzeigeinformation zu erzeugen.

Es ist auch von Vorteil, dass der Gerufene entscheiden kann, welchen Personen er welche Durchwahlnummer bekannt macht, ohne dass diese Personen von der Priorisierung wissen.

Durch die in den abhängigen Ansprüchen aufgeführten Maßnahmen und Weiterbildungen sind vorteilhafte Verbesserungen des im unabhängigen Patentanspruch angegebenen Verfahrens zur Anruferidentifikation möglich.

Besonders vorteilhaft ist, dass die mit dem Zielgerät verbundene Telekommunikationsanlage die empfangene Durchwahlnummer in die Endgerätenummer des Zielgeräts umsetzt und entsprechend der verwendeten Durchwahlnummer die Anzeigeinformationen zu dem Zielgerät überträgt. Dabei wird vorteilhafterweise ein Informationselement, das für Basic-Call-Meldungen verwendet wird, eingesetzt. Im DSS1-Amt ist dies das Informationselement Display und bei PSS1/QSIG ist dies das Informationselement Facility, die jeweils die Anzeigeinformation aufnehmen, um sie zum Telekommunikationsendgerät (Zielgerät) zu übertragen.

Weiterhin ist es von Vorteil, dass die Durchwahlnummer dadurch erzeugt wird, dass am Ursprungsgerät eine Endgerätenummer eingegeben wird, und eine Funktion gewählt wird, die bestimmt, welche Anzeige beim Gerufenen angezeigt werden soll. Damit wird die Bedienung eines Telekommunikationsendgeräts vereinfacht, das das erfindungsgemäße Verfahren ermöglicht.

Schließlich ist es auch von Vorteil, dass ein Telekommunikationsendgerät als Ziel- bzw. Ursprungsgerät vorliegt, das zur Durchführung des erfindungsgemäßen Verfahren Mittel aufweist. Weiterhin ist es von Vorteil, dass eine Telekommunikationsanlage vorliegt, die Mittel aufweist, um das erfindungsgemäße Verfahren durchzuführen.

### Zeichnung

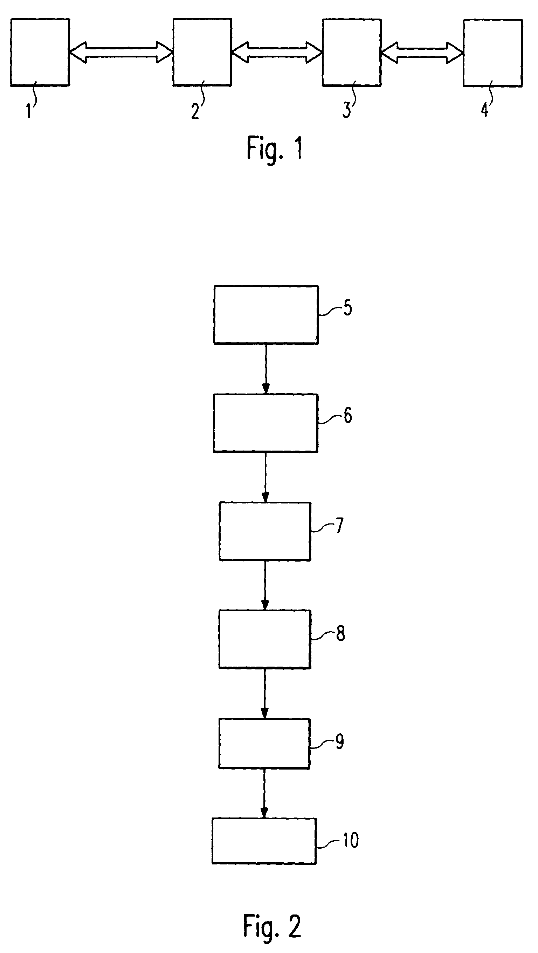

Ausführungsbeispiele der Erfindung sind in der Zeichnung dargestellt und werden in der nachfolgenden Beschreibung näher erläutert. Es zeigt Figur 1 eine Netzstruktur und Figur 2 ein erfindungsgemäßes Verfahren als Flußdiagramm.

### Beschreibung

In professionellen Bereichen, die eine hohe Anrufbelastung aufweisen, ist es für den Gerufenen notwendig, einzelne Anrufe zu priorisieren. Erfindungsgemäß wird daher einem Endgerät eine Anzahl von Durchwahlnummern zugeordnet, wobei jede Durchwahlnummer, wenn sie gewählt wird, eine Darstellung einer unterschiedlichen Anzeigeinformation am Endgerät auslöst. Damit ist es möglich, dass sich Anrufer mit wählbaren Anzeigeinformationen identifizieren. Dabei ist es einem Anrufer weiterhin möglich, je nach Bedarf unterschiedliche Anzeigeinformationen und damit unterschiedliche Durchwahlnummern auszuwählen. Außerdem kann der Gerufene entscheiden, welchen Personen er welche Durchwahlnummer bekannt macht, ohne dass diese Personen von der Priorisierung wissen. Eine mit dem Zielgerät verbundene Telekommunikationsanlage setzt diese Durchwahlnummern in eine Endgerätenummer um und überträgt zusätzlich dem Telekommunikationsendgerät die entsprechenden Anzeigeinformationen. Die Durchwahlnummer kann, wenn sie nicht direkt gewählt oder in einem Ursprungsgerät abgespeichert ist, in dem Ursprungsgerät durch eine Verknüpfung der Endgerätenummer mit der am Ursprungsgerät gewählten Anruferidentifikation erzeugt werden.

Im folgenden bezeichnet der Begriff Zielgerät das gerufene Endgerät, während der Begriff Ursprungsgerät das rufende Endgerät beschreibt. Telekommunikationsendgerät und Endgerät werden als Synonyme verwendet. DSS1-Amt ist das öffentliche Telekommunikationsnetz, während PSS1/QSIG ein Signalisierungsverfahren für Telekommunikationsanlagen in privaten Telekommunikationsnetzen ist. Bei den Signalisierungsverfahren werden Anzeigeinformationen in Informationselementen übertragen, die zu sogenannten Basic-Call-Meldungen gehören. Die Basic-Call-Meldungen werden für die Durchführung eines Rufs verwendet. Bei DSS1-Amt ist das Informationselement Display und bei PSS1/QSIG das Informationselement Facility jeweils vorhanden.

In Figur 1 ist eine Netzstruktur dargestellt. Ein Ursprungsgerät 1 als Telekommunikationsendgerät des Rufenden ist mit einer Telekommunikationsanlage 2 verbunden. Die Telekommunikationsanlage 2 ist über ein Telekommunikationsnetz mit einer Telekommunikationsanlage 3 verbunden. Darüber hinaus ist die Telekommunikationsanlage 3 mit einem Zielgerät 4 als Telekommunikationsendgerät des Gerufenen verbunden. Die Verbindung zwischen den Telekommunikationsanlage 2 und 3 kann eine beliebige Verbindung sein, ein Amt oder ein privates Netz, analog oder digital. Es ist weiterhin denkbar, dass die Telekommunikationsanlagen 2 und 3 in einer Telekommunikationsanlage zusammengefaßt sind. Es können auch eine beliebige Anzahl von Transitanlagen zwischen den Telekommunikationsanlagen 2 und 3 geschaltet sein.

Der Ruf mit der Anzeigeinformation wird hier vom Ursprungsgerät 1 gestartet und von der Telekommunikationsanlage 2 an die Telekommunikationsanlage 3 weitergeleitet. Die Telekommunikationsanlage 3 setzt die von dem Ursprungsgerät 1 gewählte Durchwahlnummer in eine Endgerätenummer um und fügt entsprechend dieser Durchwahlnummer eine Anzeigeinformation zu den Daten, die zu dem Zielgerät 4 übertragen werden, hinzu.

In Figur 2 ist als Flußdiagramm das erfindungsgemäße Verfahren zur Anruferidentifikation dargestellt. In Verfahrensschritt 5 erzeugt das Ursprungsgerät 1 eine Durchwahlnummer, indem eine Person die Durchwahlnummer direkt eingibt. Alternativ ist es möglich, dass die Durchwahlnummern abgespeichert sind oder dass eine Person die Engerätenummer für das Zielgerät 4 eingibt und eine Funktion zur Anruferidentifikation angibt. Folgende Darstellungen sind beispielsweise für den Anzeigetext, der auf der Anzeige des Zielgeräts 4 dargestellt werden soll, möglich: Geschäftsanruf, Geschäftsanruf wichtig, Privatanruf und Privatanruf wichtig. Die Durchwahlnummern codieren jeweils die einzelnen Darstellungen. Die Lösung mit der Endgerätenummer und der Funktion hat den Vorteil, dass sich ein Anrufender nicht über die Durchwahlnummern und deren Bedeutung im Klaren sein muß, sondern die Endgerätenummer des Zielgeräts kennt und eine entsprechende Anzeige hervorrufen möchte. Für diese Anzeige wählt der Anrufer mittels der Funktion den entsprechenden Text.

In Verfahrensschritt 6 vermittelt die Telekommunikationsanlage 2 den Anruf des Ursprungsgeräts 1 an die Telekommunikationsanlage 3 weiter. In Verfahrensschritt 7 wertet die Telekommunikationsanlage 3 die Durchwahlnummer, die durch das Ursprungsgerät 1 erzeugt wurde, aus. Dabei erkennt die Telekommunikationsanlage 3, welche Anzeigeinformation und welche Endgerätenummer dieser Durchwahlnummer zuzuordnen sind.

In Verfahrensschritt 8 überträgt dann die Telekommunikationsanlage 3 an das Zielgerät 4 die Anzeigeinformationen, vorzugsweise in einem Informationselement Display oder Facility. In Verfahrensschritt 9 empfängt das Zielgerät 4 die Anzeigeinformationen, um sie dann in Verfahrensschritt 10 zur Anzeige zu bringen. Die gerufene Person kann dann anhand der Anzeige entscheiden, ob sie den Anruf annimmt oder nicht. D.h. die Anzeigeinformation wird dargestellt, sobald das Zielgerät mittels eines Lautsprechers einen Ton abgibt, dass ein Anruf anliegt. Alternativ kann auch nur der Anzeigetext angezeigt werden, beispielsweise wenn schon ein anderer Anruf angenommen wurde.

## Patentansprüche

1. Verfahren zur Anruferidentifikation, wobei die Anruferidentifikation auf einer Anzeige eines Zielgeräts (4) angezeigt wird, **dadurch gekennzeichnet, dass** dem Zielgerät (4) mehrere Durchwahlnummern zugeordnet werden und dass eine der gewählten Durchwahlnummer zugeordnete Anruferidentifikation auf der Anzeige des Zielgeräts (4) dargestellt wird.

2. Verfahren nach Anspruch 1, **dadurch gekennzeichnet, dass** eine mit dem Zielgerät (4) verbundene Telekommunikationsanlage (3) die Durchwahlnummern in eine Endgerätenummer für das Zielgerät (4) umsetzt und dass die Anruferidentifikation als Anzeigeinformation dem Zielgerät (4) von der Telekommunikationsanlage (3) übertragen wird.

3. Verfahren nach Anspruch 2, **dadurch gekennzeichnet, dass** die Anzeigeinformation im Informationselement Display oder im Informationselement Facility zu dem Zielgerät (4) übertragen wird.

4. Verfahren nach Anspruch 2 oder 3, **dadurch gekennzeichnet, dass** die jeweilige Durchwahlnummer in einem Ursprungsgerät (1) durch eine Verknüpfung der Endgerätenummer mit der am Ursprungsgerät (1) vorgegebenen Anruferidentifikation erzeugt wird.

5. Endgerät zur Durchführung des Verfahrens nach einem der Ansprüche 1 bis 4.

6. Telekommunikationsanlage zur Durchführung des Verfahrens nach Anspruch 2, 3 oder 4.
